# EUROPÄISCHE PATENTSCHRIFT

(11) **EP 2 736 829 B1**
(45) Veröffentlichungstag und Bekanntmachung des Hinweises auf die Patenterteilung: **18.03.2015**
(21) Anmeldenummer: 12735291.2
(22) Anmeldetag: 11.07.2012
(51) Int. Cl.: B66B 13/30, B66B 19/00

(54) **VERFAHREN UND EINRICHTUNG ZUM AUSRICHTEN VON SCHACHTTÜREN EINES AUFZUGES**
METHOD AND DEVICE FOR ALIGNING SHAFT DOORS OF A LIFT
PROCÉDÉ ET DISPOSITIF D'ALIGNEMENT DE PORTES PALIÈRES D'UN ASCENSEUR

(30) Priorität: 28.07.2011 EP 11175843
(43) Veröffentlichungstag der Anmeldung: 04.06.2014
(73) Patentinhaber: Inventio AG, 6052 Hergiswil (CH)
(72) Erfinder: ERNY, Karl, CH-6343 Holzhäusern (CH); KOCHER, Hans, CH-6044 Udligenswil (CH)
(86) Internationale Anmeldenummer: PCT/EP2012/063602
(87) Internationale Veröffentlichungsnummer: WO 2013/013987

(56) Entgegenhaltungen:
- CN-A- 101 537 959
- US-A- 4 819 403
- US-A- 5 479 754

## Beschreibung

Die Erfindung betrifft ein Verfahren und eine Einrichtung zum Ausrichten von Schachttüren eines Aufzuges mit einer an Führungsschienen einer Aufzugkabine anbringbaren Montagelehre bestehend aus einem elektrooptischen Richtinstrument zum vertikalen Ausrichten von Schachttürteilen und aus einem Leinenset zum horizontalen Ausrichten der Schachttürteile.

Aus der Schrift CN 101537959 A ist eine Einrichtung zum Ausrichten von Schachttüren eines Aufzuges bekannt geworden. In einem Aufzugsschacht werden Führungsschienen für eine Aufzugkabine montiert und mit eine Schablone ausgerichtet. Die Schablone besteht aus einem Gabelteil, der auf eine Führugsschiene steckbar ist. Am Gabelteil ist ein erster Teil angeordnet, der den Abstand zwischen der Führungsschiene und einem Türpfosten einer montierten Stockwerktür bestimmt. Türpfostenseitig ist am ersten Teil ein zweiter Teil angeordnet, der die rechtwinklige Lage des ersten Teils gegenüber dem Türpfosten bestimmt. Die Schablone ist sperrig im Aufbau und erlaubt keine präzise Ausrichtung der Führungsschienen.

Die Einrichtung, wie sie in den Hauptansprüchen gekennzeichnet ist, löst die Aufgabe, ein Verfahren und
eine Einrichtung zu schaffen, das bzw. die mit kleinem Aufwand ein genaues Ausrichten von Schachtausrüstung ermöglicht.

Mit dem vorgeschlagenen Verfahren und mit der vorgeschlagenen Einrichtung wird das Ausrichten von Schachtausrüstung vereinfacht. Das Verfahren wie auch die Einrichtung eignet sich für unterschiedliche Schachtquerschnitte und erleichtert die Montagearbeiten im Aufzugschacht. Die Einrichtung ist kostengünstig in der Herstellung und leicht in der Handhabung und braucht wenig Platz im Werkzeugkoffer des Monteurs.

Die vorgeschlagene Einrichtung ist eine an Führungsschienen anbringbare Montagelehre bestehend aus einem elektrooptischen Richtinstrument wie beispielsweise ein Laserstrahlgerät und bestehend aus einem Leinenset.

Beim vorgeschlagenen Verfahren werden die Schachttüren nach den ausgerichteten Führungsschienen der Aufzugskabine ausgerichtet. Vor der Montage der Führungsschienen wird die Schachttüröffnung mit dem kleinsten Abstand in horizontaler Richtung zu den Führungsschienen des Grundrissplanes bestimmt. Falls der kleinste Abstand für die Durchfahrt der Aufzugskabine ungenügend ist, werden die Führungsschienen näher zu der der Türöffnung gegenüberliegenden Schachtwand montiert. Nach dem Ausrichten der Führungsschienen in horizontaler Richtung kann die Schachttüröffnung mit dem kleinsten Abstand als erste Schachttüröffnung mit einer Schachttür ausgerüstet werden. Danach werden die übrigen Schachttüröffnungen mit Schachttüren ausgerüstet, wobei der grössere Abstand in horizontaler Richtung zu den Führungsschienen mit der Türschwelle ausgeglichen wird.

Die Höhe der Bohrungen des Schwellenträgers und die Höhe der Türschwelle werden vom Meterriss bzw. einer Referenzhöhe der Schachttür her gemessen und an der Schachtwand markiert. Danach wird der Strahl des an der Führungsschiene angeordneten Laserstrahlgeräts in horizontaler Richtung auf die Höhe der Bohrungen des Schwellenträgers gerichtet. Der Laserstrahl zeichnet so eine durch die Höhenmarke der Bohrungen des Schwellenträgers verlaufende, horizontale Linie an der Schachtwand. Im Weiteren muss noch die Mitte in vertikaler Richtung aller Schachttüröffnungen, beispielsweise mittels eines Lots bestimmt werden. Ausgehend von dieser Mitte werden die Bohrlöcher auf der Laserlinie für den Schwellenträger bestimmt. Nach dem Bohren der Löcher wird der Schwellenträger montiert. Danach wird das Laserstrahlgerät an der Führungsschiene nach oben bewegt, bis die horizontale Laserlinie durch die Höhenmarke der Türschwelle verläuft. Dann wird die Türschwelle am Schwellenträger montiert und in vertikaler Richtung nach der Laserlinie ausgerichtet. Anschliessend wird die Türschwelle noch in der horizontalen Ebene und in Bezug zu den Führungsschienen mittels des an den Befestigungselementen angeordneten Seilsets überprüft und ausgerichtet. Dann werden die Türpfosten auf den Schwellenträger und auf die Türpfosten der Türkämpfer (door header) gesteckt. Der Türkämpfer wird an Befestigungsbügeln festgemacht und mittels der Montagelehre sinngemäss wie oben erläutert ausgerichtet.

Anhand der beiliegenden Figuren wird die vorliegende Erfindung beispielhaft näher erläutert.

Es zeigen:
Fig. 1
   einen Grundriss eines beispielhaften Aufzugschachts,
Fig. 2
   einen Seitenriss des Aufzugschachts,
Fig. 3
   eine Aufsicht einer Schachttüröffnung vom Aufzugschacht her gesehen,
Fig. 4, Fig. 5 und Fig. 6 ein Ausführungsbeispiel einer im Aufzugschacht verwendeten Montagelehre,
Fig. 7, Fig. 8 und Fig. 9 einen mittels der Montagelehre versetzten Schwellenträger,
Fig. 10, Fig. 11 und Fig. 12 vorbereitende Massnahmen für ein Setzen einer Schwelle,
Fig. 13, Fig. 14 und Fig. 15 ein Ausrichten der Schwelle.

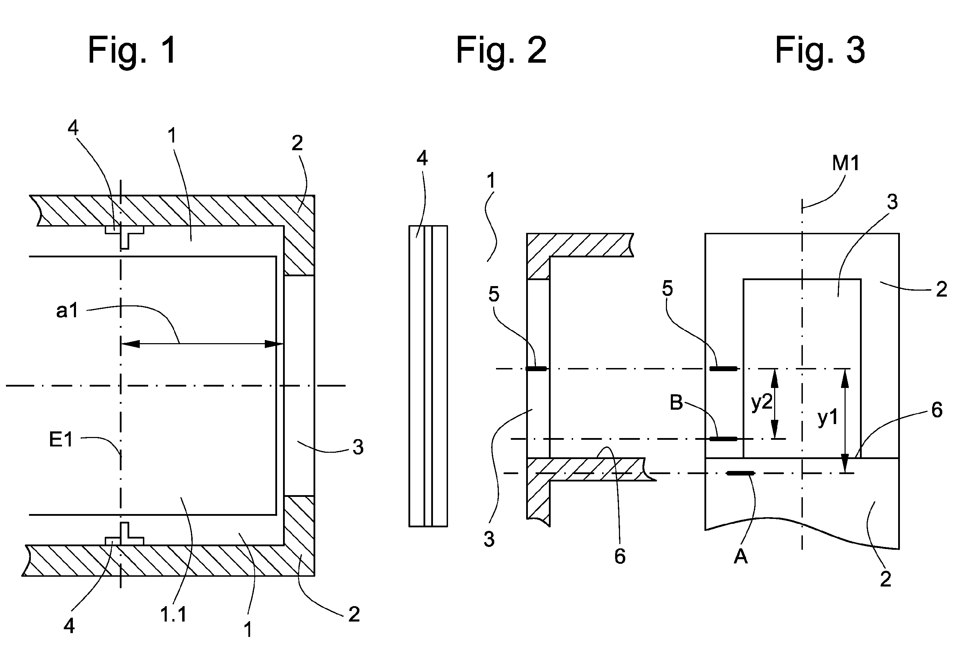

Fig. 1 zeigt einen Grundriss eines Aufzugschachts 1, der mindestens teilweise durch Schachtwände oder durch schachtwandähnliche Konstruktionen gebildet wird. Mindestens eine Schachtwand 2 weist je Stockwerk eine Schachttüröffnung 3 auf, durch die eine im Aufzugschacht 2 auf und ab bewegbare Aufzugkabine 1.1 erreichbar ist. Die Aufzugkabine 1.1 ist entlang von im Aufzugsschacht angeordneten Führungsschienen 4 geführt.

Die Führungsschienen 4 spannen über eine gesamte Schachthöhe eine parallel zur Schachtwand 2 verlaufende erste Ebene E1 auf. Vor der Montage der Führungsschienen 4 wird die Schachttüröffnung mit dem kleinsten Abstand a1 gemäss der Fig. 1 zu einer ersten Ebene E1 der Führungsschienen des Grundrissplanes bestimmt. Falls der kleinste Abstand a1 für die Durchfahrt der Aufzugskabine ungenügend ist, werden die Führungsschienen 4 näher zu der der Türöffnung gegenüberliegenden Schachtwand montiert und und in vertikaler Richtung ausgerichtet. Nach dem Ausrichten der Führungsschienen 4 kann die Schachttüröffnung 3 mit dem kleinsten Abstand a1 gemäss der Fig. 1 als erste mit einer Schachttür ausgerüstet werden. Die übrigen Schachttüröffnungen des Aufzugschachts 1 weisen je nach Genauigkeit des Aufzugschachtes einen leicht grösseren Abstand zur Ebene E1 auf, wobei die Abweichung vom kleinsten Abstand a1 durch Ausrichten der Türschwelle der jeweiligen Schachttür anpassbar ist. Der Abstand der Kabinenschwelle zur Schachttürschwelle ist somit auf jedem Stockwerk gleich.

Fig. 2 zeigt einen Seitenriss des Aufzugschachts 1 mit einem Meterriss 5 in der Schachttüröffnung 3 und mit einem Stockwerkboden 6 im Rohbau. Der Meterriss 5 (bench mark) ist eine üblicherweise nach der Fertigstellung des Rohbaus angebrachte Markierung an einer Türöffnung, in die beispielsweise eine Türzarge oder eine Stockwerktür eingesetzt wird. Der Meterriss 5 gibt eine Höhe von einem Meter über dem fertigen Fusssboden oder dem fertigen Stockwerkboden 6 an und ist eine verbindliche Referenzhöhe für die am Bau Beteiligten wie beispielsweise Bodenleger, Türbauer, Aufzugbauer, Elektriker, Maurer, etc..

Fig. 3 zeigt eine Aufsicht der Schachttüröffnung 3 vom Aufzugschacht 1 her gesehen. In einem ersten vertikalen Abstand y1 vom Meterriss 5 ist eine erste Markierung A und in einem zweiten vertikalen Abstand y2 ist eine zweite Markierung B vorgesehen. Die erste Markierung A ist eine Referenzhöhe für die Bohrlöcher zur Befestigung eines Schwellenträgers an der Schachtwand 2 und die zweite Markierung B ist eine Referenzhöhe für eine am Schwellenträger angeordnete Türschwelle. Im Weiteren wird noch eine Mitte M1 in vertikaler Richtung aller Schachttüröffnungen 3, beispielsweise mittels eines Lots bestimmt.

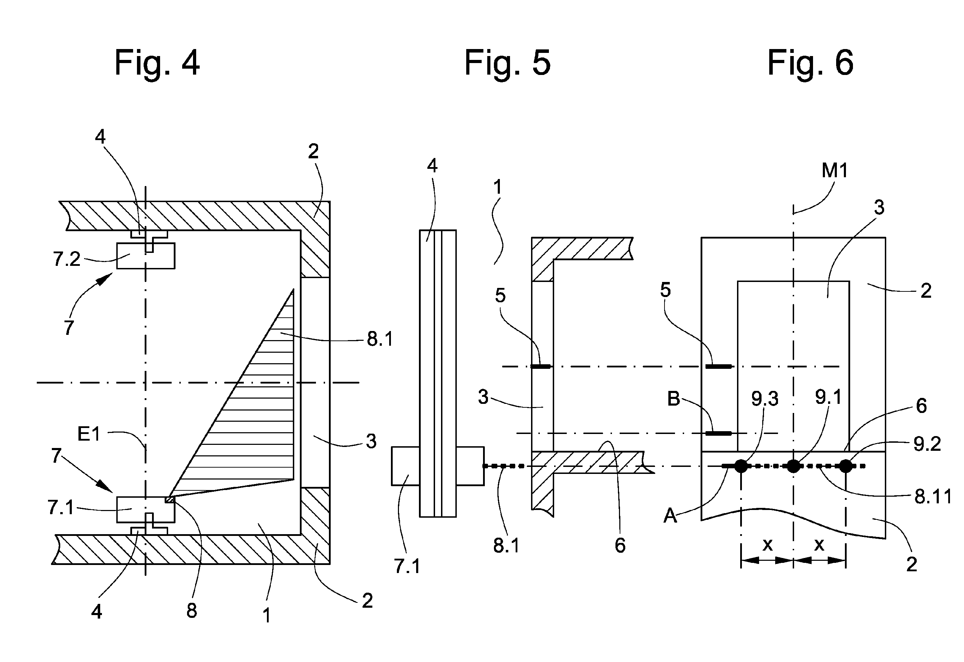

Fig. 4, Fig. 5 und Fig. 6 zeigen ein Ausführungsbeispiel einer im Aufzugschacht 1 verwendeten, zweiteiligen Montagelehre 7, wobei ein erster Teil 7.1 an der einen Führungsschiene 4 und ein zweiter Teil 7.2 an der anderen Führungsschiene 4 vorgesehen ist. Am ersten Teil 7.1 ist ein Richtinstrument beispielsweise ein elektrooptisches Richtinstrument wie beispielsweise ein Laserstrahlgerät 8 angeordnet, das einen horizontalen Laserstrahl 8.1 erzeugt. Das Laserstrahlgerät 8 kann auch am zweiten Teil 7.2 angeordnet sein. Der erste Teil 7.1 und der zweite Teil 7.2 der Montagelehre 7 werden in vertikaler Richtung so angeordnet, dass der horizontale Laserstrahl 8.1 die erste Markierung A trifft bzw. nach dieser ausgerichtet ist und an der Schachtwand 2 als horizontale Laserlinie 8.11 sichtbar wird. Im Schnittpunkt der Mitte M1 der Schachttüröffnung 3 mit der Laserlinie 8.11 wird das erste Bohrloch 9.1 für die Befestigung des Schwellenträgers erstellt. Weitere Bohrlöcher 9.2, 9.3 für die Befestigung des Schwellenträgers an der Schachtwand 2 werden in einem Abstand x vom ersten Bohrloch 9.1 erstellt.

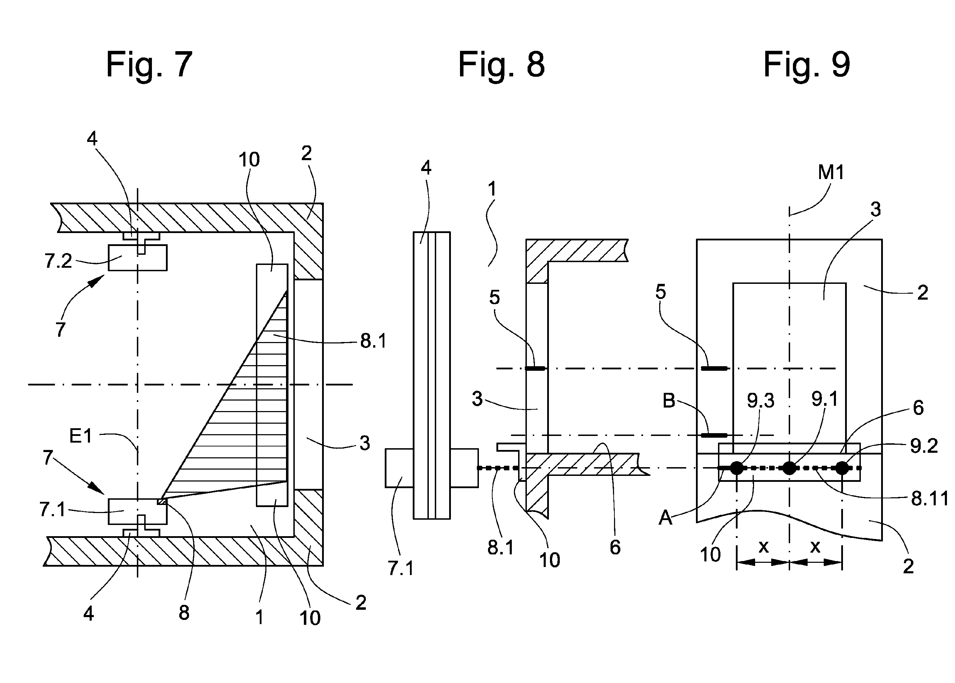

Fig. 7, Fig. 8 und Fig. 9 zeigen beispielhaft den mittels der Montagelehre versetzten Schwellenträger 10. In die Bohrlöcher 9.1, 9.2, 9.3 werden Bolzen versetzt und an diesen der Schwellenträger 10 festgemacht. Anstelle der Bohrlöcher 9.1, 9.2, 9.3 kann auch eine Unterputz montierte Ankerschiene vorgesehen sein, an der der Schwellenträger 10 verschraubbar ist. Nach dem Setzen des Schwellenträgers 10 werden die Abstände x von der Mitte M1 der Schachttüröffnung 3 nachgemessen und die Lage in vertikaler Richtung mittels der Laserlinie 8.11 überprüft und falls nötig ausgerichtet bzw. korrigiert.

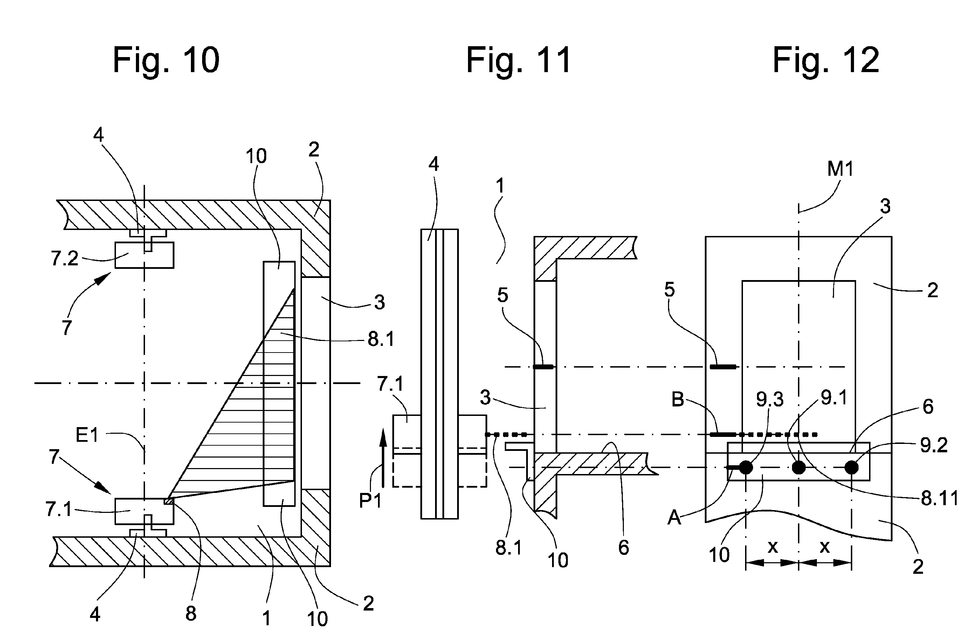

Fig. 10, Fig. 11 und Fig. 12 zeigen vorbereitende Massnahmen für das Setzen einer Schwelle. Die Montagelehre 7 mit dem ersten Teil 7.1 und mit dem zweiten Teil 7.2 wird, wie in Fig. 11 mit einem ersten Pfeil P1 gezeigt, entlang der Führungsschiene 4 nach oben geschoben, bis der horizontale Laserstrahl 8.1 die zweite Markierung B trifft bzw. nach dieser ausgerichtet ist und an der Schachtwand 2 als horizontale Laserlinie 8.11 sichtbar wird.

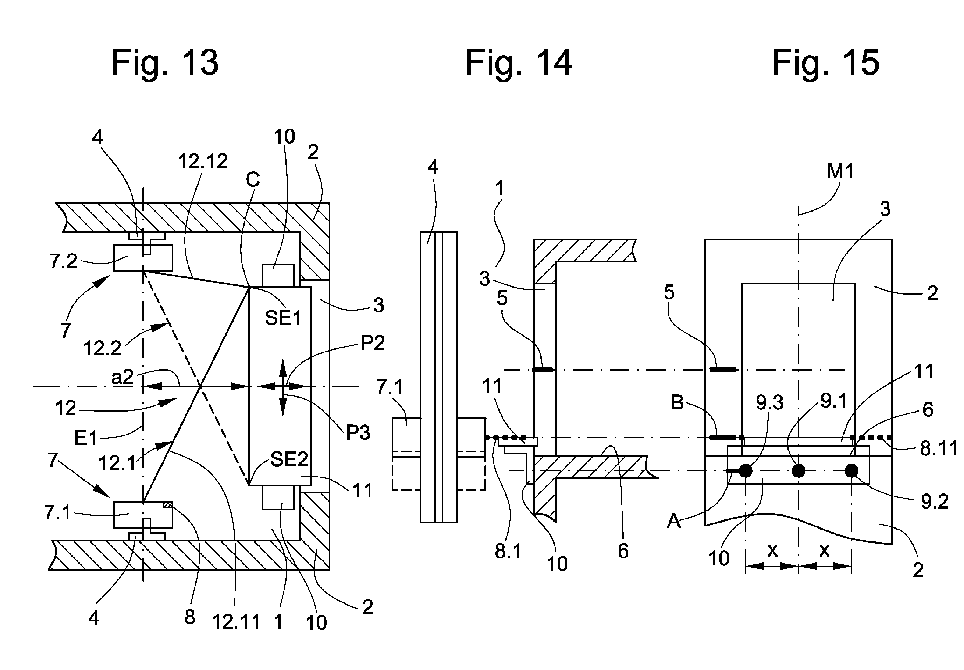

Fig. 13, Fig. 14 und Fig. 15 zeigen das Ausrichten der auf den Schwellenträger 10 aufgesetzten Schwelle 11. Die Schwelle 11 wird auf den ausgerichteten Schwellenträger 10 montiert und in vertikaler Richtung mit der Laserlinie 8.11 überprüft. Die Ausrichtung der Schwelle 11 in horizontaler Richtung ist mit einem zweiten Pfeil P2 und mit einem dritten Pfeil P3 symbolisiert und wird mit einem Leinenset 12 der Montagelehre 7 vorgenommen. Das Leinenset 12 besteht aus einer ersten Leine 12.1 und aus einer zweiten Leine 12.2. Zum besseren Verständnis ist die zweite Leine 12.2 mit einer unterbrochenen Linie dargestellt. Die erste Leine 12.1 geht mit einem ersten Strang 12.11 vom ersten Teil 7.1
der Montagelehre 7 aus bis zu einer dritten Markierung C der ersten Leine 12.1 und von da mit einem zweiten Strang 12.12 bis zum zweiten Teil 7.2 der Montagelehre 7. Die gespannte erste Leine 12.1 reicht an der dritten Markierung C an eine erste Ecke SE1 der Schwelle 11. Die zweite Leine 12.2 geht vom zweiten Teil 7.2 aus und reicht im gespannten Zustand am freien Ende an eine zweite Ecke SE2 der Schwelle 11. Sind die Leinen 12.1, 12.2 gespannt und die dritte Markierung C an der ersten Ecke SE1 der Schwelle 11 und das freie Ende der zweiten Leine 12.2 and der zweiten Ecke SE2 der Schwelle 11, ist die Schwelle 11 in horizontaler Richtung ausgerichtet. Die Länge des ersten Strangs 12.11, die Länge des zweiten Strangs 12.12 und die Länge der zweiten Leine 12.2 ist vorgegeben durch die Lage der Führungsschienen 4 im Aufzugsschacht 1, durch die Schachtabmessungen, durch den Kabinengrundriss und durch die Schwellenabmessungen. Die Länge der Stränge 12.11, 12.12 und die Länge der zweiten Leine 12.2 können berechnet werden oder fabrikseitig nach dem Grundrissplan des zu montierenden Aufzuges vorbereitet werden oder bestimmt werden durch Mass nehmen an einer Musterschwelle. Als Musterschwelle kann beispielsweise die Schwelle der oben genannten, erstmontierten Schachttür verwendet werden, wobei diese Schachttür in diesem Falle ohne die vorgeschlagene Montagelehre ausgerichtet worden ist. Massgebend für die Musterschwelle ist der Abstand a2 rechtwinklig zur und von der Schwelle 11 bis zur Ebene E1 gemessen.

Am ersten Teil 7.1 kann eine Rollvorrichtung für die erste Leine 12.1 und am zweiten Teil 7.2 kann eine Rollvorrichtung für die zweite Leine 12.2 vorgesehen sein, so dass die Leinen 12.1, 12.2 für das Ausrichtprozedere abrollbar sind und nach dem Ausrichtprozedere wieder aufrollbar sind.

In einer weiteren Ausführungsvariante kann das Leinenset 12 aus drei Leinen bestehen, indem die erste Leine 12.1 bei der dritten Markierung C durchtrennt wird. Gegenüber dem oben dargestellten Leinenset wird bei der Dreileinenvariante der zweite Strang 12.12 mit der Trennung der ersten Leine 12.1 bei der dritten Markierung C zur dritten Leine. In dieser Ausführungsvariante hat jede Leine ein am ersten Teil 7.1 bzw. ein am zweiten Teil 7.2 festgemachtes Ende und ein freies Ende. Bei der Handhabung und in der Anwendung ist die Dreileinenvariante vergleichbar mit der oben erläuterten Zweileinenvariante.

Nach dem Setzen und Ausrichten der Schwelle 11 werden die Türpfosten auf den Schwellenträger 10 und auf die Türpfosten einen Türkämpfer (door header) gesteckt und der Türkämpfer an oberhalb der Schachttüröffnung 3 angeordneten Bügeln festgemacht. Der Türkämpfer dient als Träger für beispielsweise Führungen und Ankopplungseinrichtungen und Verriegelungseinrichtungen für die Schachttüren. Der Türkämpfer muss in analoger Weise zur Schwelle 11 ausgerichtet werden. Dies kann mit den oben genannten Verfahrenschritten und mit der oben genannten Montagelehre erfolgen.

## Patentansprüche

1. Verfahren zum Ausrichten von Schachttüren eines Aufzuges nach folgenden Schritten:
a) Anbringen einer Referenzhöhe (5) an einer Schachttüröffnung (3),
b) Anbringen einer ersten Markierung (A) in einem ersten vertikalen Abstand (y1) von der Referenzhöhe (5) und
Anbringen einer zweiten Markierung (B) in einem zweiten vertikalen Abstand (y2) von der Referenzhöhe (5),
c) Anbringen einer Montagelehre (7) mit einem elektrooptischen Richtinstrument (8) an in einem Aufzugschacht (1) angeordneten Führungsschienen (4) und
Ausrichten eines horizontalen Strahls (8.1) des Richtinstruments (8) nach den Markierungen (A, B) und
vertikales Ausrichten von Schachttürteilen (11) nach dem horizontalen Strahl (8.1) und
d) horizontales Ausrichten der Schachttürteile (11) mittels eines Leinensets (12) der Montagelehre (7).

2. Verfahren nach Anspruch 1,
wobei die Schachttürteile (11) mittels mindestens zwei Leinen (12.1, 12.2) des Leinensets (12) horizontal ausgerichtet werden.

3. Einrichtung zum Ausrichten von Schachttüren eines Aufzuges mit einer an Führungsschienen (4) einer Aufzugkabine (1.1) anbringbaren Montagelehre (7) bestehend aus einem an der einen Führungsschiene (4) anbringbaren ersten Teil (7.1) und aus einem an der anderen Führungsschiene (4) anbringbaren zweiten Teil (7.2) und aus einem elektrooptischen Richtinstrument (8) zum vertikalen Ausrichten von Schachttürteilen (11) und aus einem Leinenset (12) mit mindestens zwei Leinen (12.1, 12.2) zum horizontalen Ausrichten der Schachttürteile (11).

4. Einrichtung nach Anspruch 3,
wobei das Leinenset (12) aus einer ersten Leine (12.1) und aus einer zweiten Leine (12.2) besteht, wobei die erste Leine (12.1) einstückig ist und einen ersten Strang (12.11) und einen zweiten Strang (12.12) und zwischen den Strängen (12.11, 12.12) eine dritte Markierung (C) aufweist.

5. Einrichtung nach Anspruch 4,
wobei die erste Leine (12.1) an einem Ende mit einem der Teile (7.1) und an einem anderen Ende mit dem anderen Teil (7.2) verbunden ist und die zweite Leine (12.2) am einen Ende mit dem anderen Teil (7.2) verbunden ist.

6. Einrichtung nach einem der Ansprüche 3 bis 5,
wobei die Schachttürteile (11) mittels der dritten Markierung (C) und mittels des anderen Endes der zweiten Leine (12.2) horizontal ausrichtbar sind.

7. Einrichtung nach Anspruch 3,
wobei das Leinenset (12) aus einer ersten Leine (12.11) und aus einer zweiten Leine (12.2) und aus einer dritten Leine (12.12) besteht und die erste Leine (12.11) an einem Ende mit einem der Teile (7.1) verbunden ist und die zweite Leine (12.2) und dritte Leine (12.12) am einen Ende mit dem anderen Teil (7.2) verbunden sind.

8. Einrichtung nach Anspruch 7,
wobei die Schachttürteile (11) mittels des anderen Endes der ersten, zweiten und dritten Leine (12.11, 12.2, 12.12) horizontal ausrichtbar sind.

9. Einrichtung nach einem der Ansprüche 3 bis 8,
wobei das Richtinstrument (8) an einem der Teile (7.1, 7.2) angeordnet und ein Laserstrahlgerät (8) ist, das einen horizontalen Laserstrahl (8.1) erzeugt.

## Claims

1. Method of aligning shaft doors of a lift according to the following steps:
a) applying a reference height (5) to a shaft door opening (3),
b) applying a first marking (A) at a first vertical spacing (y1) from the reference height (5) and applying a second marking (B) at a second vertical spacing (y2) from the reference height (5),
c) mounting an assembly jib (7) with an electro-optical sighting instrument (8) at guide rails (4) arranged in a lift shaft (1), orienting a horizontal beam (8.1) of the sighting instrument (8) to the markings (A, B) and vertical aligning of shaft door parts (11) according to the horizontal beam (8.1) and
d) horizontal aligning of the shaft door parts (11) by means of a line set (12) of the assembly jig (7).

2. Method according to claim 1, wherein the shaft door parts (11) are horizontally aligned by means of at least two lines (12.1, 12.2) of the line set (12).

3. Equipment for aligning shaft doors of a lift with an assembly jig (7) which can be mounted on guide rails (4) of a lift cage (1.1) and which consists of a first part (7.1) mountable on one guide rail (4), a second part (7.2) mountable on the other guide rail (4), an electro-optical sighting instrument (8) for vertical alignment of shaft door parts (11) and a line set (12) with at least two lines (12.1, 12.2) for horizontal alignment of the shaft door parts (11).

4. Equipment according to claim 3, wherein the line set (12) consists of a first line (12.1) and a second line (12.2), wherein the first line (12.1) is integral and has a first run (12.11), a second run (12.12) and a third marking (C) between the runs (12.11, 12.12).

5. Equipment according to claim 4, wherein the first line (12.1) is connected at one end with one of the parts (7.11) and at another end with the other part (7.2) and the second line (12.2) is connected at one end with the other part (7.2).

6. Equipment according to any one of claims 3 to 5, wherein the shaft door parts (11) are horizontally alignable by means of the third marking (C) and by means of the other end of the second line (12.2).

7. Equipment according to claim 3, wherein the line set (12) consists of a first line (12.11), a second line (12.2) and a third line (12.12) and the first line (12.11) is connected at one end with one of the parts (7.1) and the second line (12.2) and third line (12.12) are connected at one end with the other part (7.2).

8. Equipment according to claim 7, wherein the shaft door parts (11) are horizontally alignable by means of the other end of the first, second and third lines (12.11, 12.2, 12.12).

9. Equipment according to any one of claims 3 to 8, wherein the sighting instrument (8) is arranged at one of the parts (7.1, 7.2) and is a laser beam instrument (8) which generates a horizontal laser beam (8.1).

## Revendications

1. Procédé d'alignement de portes palières d'un ascenseur selon les étapes suivantes :
a) installation d'une hauteur de référence (5) sur une ouverture de porte palière (3),
b) installation d'un premier marquage (A) à une première distance verticale (y1) de la hauteur de référence (5) et
installation d'un deuxième marquage (B) à une deuxième distance verticale (y2) de la hauteur de référence (5),
c) installation d'un gabarit de montage (7) avec un instrument d'alignement électro-optique (8) sur des guides (4) disposés dans une gaine d'ascenseur (1), et
alignement d'un rayon horizontal (8.1) de l'instrument d'alignement (8) selon les marquages (A, B) et
alignement vertical d'éléments de portes palières (11) selon le rayon horizontal (8.1), et
d) alignement horizontal des éléments de portes palières (11) à l'aide d'une série de cordeaux (12) du gabarit de montage (7).

2. Procédé selon la revendication 1, étant précisé que les éléments de portes palières (11) sont alignés horizontalement à l'aide d'au moins deux cordeaux (12.1, 12.2) de la série de cordeaux (12).

3. Dispositif d'alignement de portes palières d'un ascenseur avec un gabarit de montage (7) apte à être installé sur des guides (4) d'une cabine d'ascenseur (1.1), composé d'une première partie (7.1) apte à être installée sur un guide (4) et d'une deuxième partie (7.2) apte à être installée sur l'autre guide (4), et d'un élément d'alignement électro-optique (8) pour l'alignement vertical d'éléments de portes palières (11), et d'une série de cordeaux (12) avec au moins deux cordeaux (12.1, 12.2) pour l'alignement horizontal des éléments de portes palières (11).

4. Dispositif selon la revendication 3, étant précisé que la série de cordeaux (12) se compose d'un premier cordeau (12.1) et d'un deuxième cordeau (12.2), et que le premier cordeau (12.1) est d'une seule pièce et comporte un premier brin (12.11) et un deuxième brin (12.12) et, entre les brins (12.11, 12.12), un troisième marquage (C).

5. Dispositif selon la revendication 4, étant précisé que le premier cordeau (12.1) est relié à l'une des parties (7.1), à une extrémité, et à l'autre partie (7.2), à une autre extrémité, et que le deuxième cordeau (12.2) est relié à l'autre partie (7.2), à une extrémité.

6. Dispositif selon l'une des revendications 3 à 5, étant précisé que les éléments de portes palières (11) sont aptes à être orientés horizontalement à l'aide du troisième marquage (C) et à l'aide de l'autre extrémité du deuxième cordeau (12.2).

7. Dispositif selon la revendication 3, étant précisé que la série de cordeaux (12) se compose d'un premier cordeau (12.11), d'un deuxième cordeau (12.2) et d'un troisième cordeau (12.12), que le premier cordeau (12.11) est relié à l'une des parties (7.1), à une extrémité, et que le deuxième cordeau (12.2) et le troisième cordeau (12.12) sont reliés à l'autre partie (7.2), à une extrémité.

8. Dispositif selon la revendication 7, étant précisé que les éléments de portes palières (11) sont aptes à être orientés horizontalement à l'aide de l'autre extrémité des premier, deuxième et troisième cordeaux (12.11, 12.2, 12.12).

9. Dispositif selon l'une des revendications 3 à 8, étant précisé que l'instrument d'alignement (8) est disposé sur l'une des parties (7.1, 7.2) et est constitué par un appareil laser (8) qui produit un rayon laser horizontal (8.1).
